# EUROPEAN PATENT APPLICATION

(11) **EP 4 765 385 A1**
(43) Date of publication of application: **24.06.2026**
(21) Application number: 24886251.8
(22) Date of filing: 30.10.2024
(51) Int. Cl.: H01M 50/186, H01M 50/105, H01M 50/148, H01M 50/174, H01M 50/627, B29C 65/00, B29C 65/24

(54) **SECONDARY BATTERY AND SEALING BLOCK FOR SEALING SECONDARY BATTERY**

(30) Priority: 30.10.2023 KR 20230147085; 29.10.2024 KR 20240149726
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); YU, Hyung Kyun, Daejeon 34122 (KR); CHOI, Ji Eun, Daejeon 34122 (KR); LEE, Ji Sun, Daejeon 34122 (KR)
(74) Representative: Goddar, Heinz J.
(86) International application number: PCT/KR2024/016811
(87) International publication number: WO 2025/095579

(57) **Abstract**

The present disclosure relates to a secondary battery that can be charged and discharged and a sealing block for sealing the secondary battery by applying pressure to the secondary battery. A secondary battery according to the present disclosure may include an electrode assembly; a pouch-type exterior material having an internal space that accommodates the electrode assembly and an exterior material opening that allows the internal space to communicate with the outside; and a cover member inserted into the exterior material opening, wherein a part of an inner surface of the exterior material facing the cover member may include a sealing surface that is coupled to the cover member to seal an inside of the exterior material; and a separation surface that is separated from the cover member. A sealing block according to the present disclosure seals a secondary battery including an electrode assembly; a pouch-type exterior material forming an internal space that accommodates the electrode assembly; and a cover member inserted into an exterior material opening that allows the internal space to communicate with an outside, and the sealing block may include a press body that presses the exterior material and the cover member, thereby allowing the exterior material and the cover member to be fused to each other to form a sealing portion for sealing the internal space.

## Description

### TECHNICAL FIELD

### CROSS-REFERENCE TO RELATED APPLICATIONS

The present application claims priority to Korean Patent Application No. 10-2023-0147085 filed on October 30, 2023 and Korean Patent Application No. 10-2024-0149726 filed on October 29, 2024 in the Republic of Korea, the disclosures of which are incorporated herein by reference.

### TECHNICAL FIELD

The present disclosure relates to a secondary battery and a sealing block for sealing the secondary battery, and more specifically, to a secondary battery that can be charged and discharged and a sealing block for sealing the secondary battery by applying pressure to the secondary battery.

### BACKGROUND ART

A secondary battery (rechargeable battery) is a battery that can be charged and discharged, unlike a primary battery that cannot be recharged. A small secondary battery is used in portable electronic devices such as mobile phones, laptop computers and camcorders, while a medium or large secondary battery is widely used as a power source for driving motors in hybrid vehicles or the like.

Such a secondary battery may be classified in various ways depending on the type of exterior material that accommodates an electrode assembly. For example, the secondary battery may be classified into a prismatic secondary battery in which an electrode assembly is accommodated inside a prismatic metal can, a cylindrical secondary battery in which an electrode assembly is accommodated inside a cylindrical metal can, and a pouch-type secondary battery in which an electrode assembly is accommodated inside a pouch composed of a laminate sheet.

Meanwhile, a pouch-type secondary battery may be manufactured by means of accommodating an electrode assembly in a cup portion within a pouch and then sealing the pouch, and the molding depth of such a cup portion was limited due to the material properties of the pouch, so that there was a problem of being unable to mold the cup portion deep enough to increase the capacity of the secondary battery.

To solve this problem, a pouch-type secondary battery was conventionally manufactured by seating the electrode assembly in a pouch-type exterior material, folding or rolling the exterior material to form an internal space for accommodating the electrode assembly, inserting a cover member into an open area communicating with the internal space, and then sealing the exterior material and the cover member.

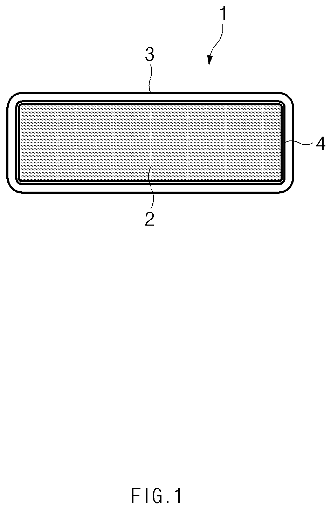

FIG. 1 is a view showing an example of a conventional pouch-type secondary battery, and FIG. 1 is a view schematically showing a conventional pouch-type secondary battery as viewed from the front. The pouch-type secondary battery 1 includes a pouch-type exterior material 3 that accommodates an electrode assembly therein, a cover member 2 that is inserted into an open area of the exterior material 3, and a sealing portion 4 that is formed by coupling the cover member 2 and the exterior material 3 and seals the internal area of the exterior material 3.

The exterior material 3 is composed of a metal substrate layer and a resin layer formed on both surfaces of the metal substrate layer, and the sealing portion 4 may be formed by thermally fusing an inner resin layer formed on the inner surface of the exterior material 3 and the cover member 2. Here, a process of pressing the cover member 2 and the exterior material 3 with a high-temperature sealing block should be performed to thermally fuse the inner resin layer of the exterior material 3 and the cover member 2.

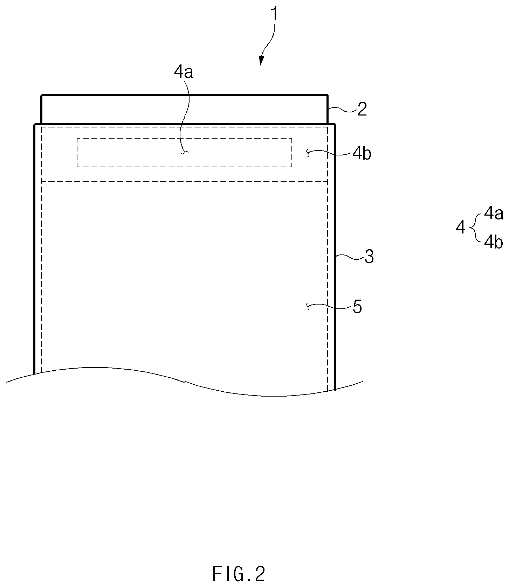

FIG. 2 is a view for describing the occurrence of a crack in a sealing portion of the pouch-type secondary battery of FIG. 1, and FIG. 2 shows that a crack is formed in the middle area 4a of one surface of the sealing portion 4 according to FIG. 1. In FIG. 2, all areas of the inner surface of the exterior material 3 facing the cover member 2 are thermally fused to the cover member 2 to form the sealing portion 4. That is, the sealing portion 4 is formed in all areas where the inner surface of the exterior material 3 and the cover member 2 face each other, and the sealing portion 4 is formed as wide as possible.

When the sealing portion 4 is formed widely in this way, heat and pressure are not sufficiently transmitted to the side area 4b of the sealing portion 4, and thus there is a problem that the sealing performance of the side area 4b of the sealing portion 4 is degraded.

Additionally, when the sealing portion 4 is heated and pressed for a long time to improve the sealing performance of the side area 4b of the sealing portion 4, there is a problem that the middle area 4a of the sealing portion 4 is excessively sealed and cracks occur in the middle area 4a.

### SUMMARY

### TECHNICAL PROBLEM

The present disclosure is designed to solve the problems of the related art, and therefore the present disclosure is directed to providing a secondary battery that prevents cracks from occurring in a sealing portion and has improved sealing performance of the sealing portion, and a sealing block for sealing such a secondary battery.

### TECHNICAL SOLUTION

A secondary battery according to the present disclosure may include an electrode assembly; a pouch-type exterior material having an internal space that accommodates the electrode assembly and an exterior material opening that allows the internal space to communicate with the outside; and a cover member inserted into the exterior material opening, wherein a part of an inner surface of the exterior material facing the cover member may include a sealing surface that is coupled to the cover member to seal an inside of the exterior material; and a separation surface that is separated from the cover member.

The exterior material may be formed by rolling or folding an exterior material sheet so that one end and the other end of the exterior material sheet including a metal layer and a resin layer formed on both surfaces of the metal layer meet each other.

One end and the other end of the exterior material sheet may be bonded or fused to each other.

The sealing surface may be coupled to the cover member by adhesion or fusion.

The cover member may have a cuboid block shape.

On each surface of the cover member facing the inner surface of the exterior material, a sealing area where the sealing surface is coupled and a separation area facing the separation surface may be formed.

The sealing area may include a first sealing area in a straight line shape extending along an edge of the inner surface of the exterior material; a second sealing area extending from one end of the first sealing area toward the internal space; and a third sealing area extending from the other end of the first sealing area toward the internal space.

The second and third sealing areas may extend along one side edge and the other side edge of the cover member, respectively.

A through hole into which an electrode lead electrically connected to the electrode assembly is inserted may be formed in the cover member.

An electrolyte injection port for injecting an electrolyte into the internal space of the exterior material in which the electrode assembly is accommodated may be formed in the cover member.

A portion of the cover member may be exposed to an outside of the exterior material.

A thickness of the first sealing area may be greater than or equal to a thickness of each of the second sealing area and the third sealing area.

The thickness of the first sealing area may be 3 mm to 10 mm, and the thicknesses of the second sealing area and the third sealing area may be 3 mm to 7 mm, respectively.

Meanwhile, a sealing block according to the present disclosure seals a secondary battery including an electrode assembly; a pouch-type exterior material forming an internal space that accommodates the electrode assembly; and a cover member inserted into an exterior material opening that allows the internal space to communicate with an outside, and the sealing block may include a press body that presses the exterior material and the cover member, thereby allowing the exterior material and the cover member to be fused to each other to form a sealing portion for sealing the internal space.

The press body may include a first body in a cuboid block shape extending in a straight line; a second body extending from one end of the first body in a direction perpendicular to the direction in which the first body extends; and a third body extending from the other end of the first body in a direction parallel to the direction in which the second body extends.

The sealing block according to the present disclosure may further include a heating member that heats the press body.

### ADVANTAGEOUS EFFECTS

A secondary battery according to the present disclosure has a sealing surface formed only in a part of the area where the exterior material and the cover member face each other, and thus the area where heat and pressure are transmitted is formed relatively narrow, thereby preventing cracks from occurring due to excessive sealing.

A sealing block according to the present disclosure includes a press body that presses only the edge portion of the area where the exterior material and the cover member of the secondary battery face each other, which may prevent the area where the exterior material and the cover member of the secondary battery face each other from being excessively sealed.

### BRIEF DESCRIPTION OF THE DRAWINGS

FIG. 1 is a view showing an example of a pouch-type secondary battery.
FIG. 2 is a view for describing the occurrence of a crack in a sealing portion of the pouch-type secondary battery of FIG. 1.
FIG. 3 is a perspective view of a secondary battery according to the present disclosure.
FIG. 4 is an exploded perspective view of a secondary battery according to the present disclosure.
FIG. 5 is a cross-sectional view taken along the AA' direction of FIG. 3.
FIG. 6 is a view schematically showing a state in which an exterior material and a cover member are coupled to each other in a secondary battery according to the present disclosure.
FIG. 7 is a view schematically showing a state in which a cover member is inserted into an exterior material in a secondary battery according to the present disclosure.
FIG. 8 is a development view of an exterior material for specifically describing a sealing surface and a separation surface in a secondary battery according to the present disclosure.
FIG. 9 is a view for describing parameters of an upper sealing surface in a secondary battery according to the present disclosure.
FIG. 10 is a view for describing parameters of a right sealing surface in a secondary battery according to the present disclosure.
FIG. 11 is a perspective view showing a cover member of a secondary battery according to the present disclosure.
FIG. 12 is a perspective view of a sealing block according to the present disclosure.
FIG. 13 is a cross-sectional view taken along the BB' direction of FIG. 12.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery and a sealing block for sealing a secondary battery according to the present disclosure will be described with reference to the drawings.

### Secondary battery

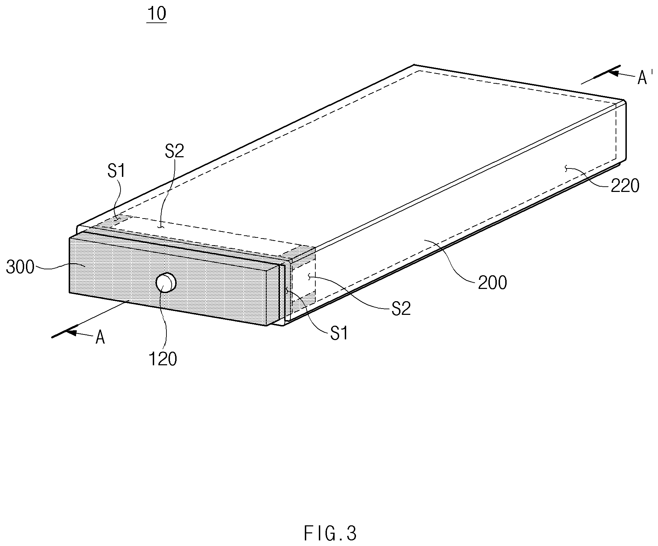

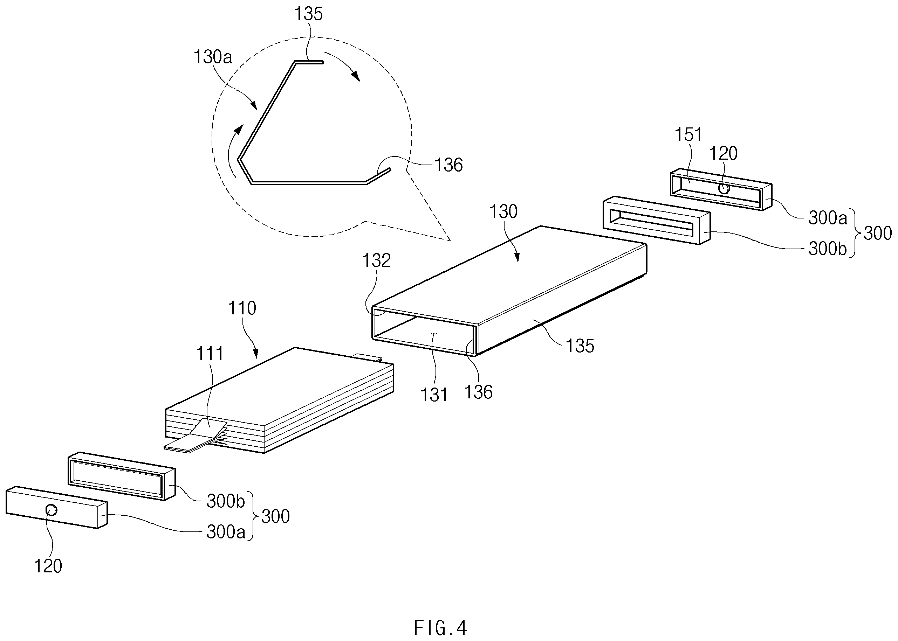

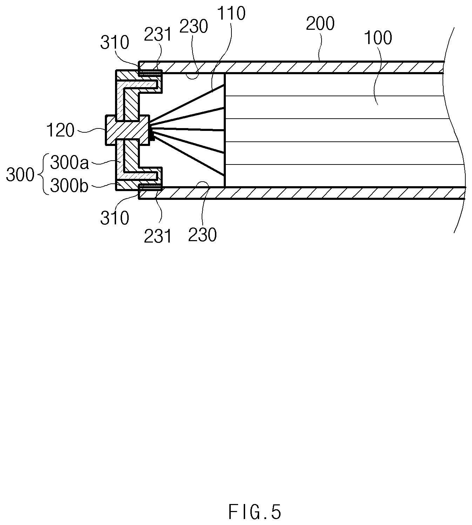

FIG. 3 is a perspective view of a secondary battery 10 according to the present disclosure, and FIG. 4 is an exploded perspective view of a secondary battery 10 according to the present disclosure. FIG. 5 is a cross-sectional view taken along the AA' direction of FIG. 3.

Referring to FIGS. 3 to 5, a secondary battery 10 according to the present disclosure may include an electrode assembly 100; a pouch-type exterior material 200 having an internal space 220 that accommodates the electrode assembly 100 and an exterior material opening 210 that allows the internal space 220 to communicate with the outside; and a cover member 300 inserted into the exterior material opening 210. Here, a part of the cover member 300 inserted into an exterior material 200 may be coupled to the exterior material 200 to form a sealing portion S1 that seals the internal space 220, and the remaining part of the cover member 300 inserted into the exterior material 200 may form a non-sealing portion S2 separated from the exterior material 200.

The electrode assembly 100 is a stack including a positive electrode, a negative electrode and a separator, and may have various structures. For example, the electrode assembly may be a stack type electrode assembly in which a positive electrode, a negative electrode and a separator are stacked in one direction, or a stack-folding type electrode assembly in which a positive electrode, a negative electrode and a separator are stacked in one direction and then folded.

Here, the positive electrode may include a positive electrode current collector and a positive electrode active material coated on the positive electrode current collector, and the negative electrode may include a negative electrode current collector and a negative electrode active material coated on the negative electrode current collector. The separator is an insulating material membrane interposed between the positive electrode and the negative electrode to block contact between the positive electrode and the negative electrode, and a plurality of pores through which positive ions pass may be formed in the separator.

The exterior material 200 is formed by winding an exterior material sheet 200a in one direction, and the internal space 220 for accommodating the electrode assembly 100 may be formed inside the wound exterior material sheet 200a. Additionally, both sides of the internal space 220 may communicate with the outside.

Specifically, the exterior material sheet 200a is a sheet having one end 201a and the other end 202a spaced apart from the one end 201a in a predetermined direction, and the exterior material 200 may be formed by rolling or folding the exterior material sheet 200a so that the one end 201a and the other end 202a meet. The one end 201a and the other end 202a of the exterior material sheet 200a may be coupled to each other in various ways. For example, the one end 201a and the other end 202a may be bonded with an adhesive, or the one end 201a and the other end 202a may be thermally fused to each other by receiving heat and pressure.

The one end 201a of the exterior material sheet 200a may be coupled to an inner surface or an outer surface of the other end 202a. As shown in FIG. 4, the outer surface of the one end 201a of the exterior material sheet 200a may be coupled to the inner surface of the other end 202a. Additionally, the inner surface of the one end 201a of the exterior material sheet 200a may be coupled to the inner surface of the other end 202a.

Meanwhile, the exterior material sheet 200a may be a laminate sheet including a metal layer such as aluminum or stainless steel. At this time, a resin layer may be formed on each of an outer surface and an inner surface of the metal layer.

The metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be coupled to a cover member 300 to be described later to seal the internal space 220, and the second resin layer may be composed of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

Conventionally, a pouch-type secondary battery was manufactured by molding a cup portion on a pouch film, inserting an electrode assembly into the cup portion, and then sealing the pouch film in which the cup portion is molded with another pouch film. However, the molding depth of the cup portion was limited due to the material properties of the pouch film, and thus it was impossible to mold the cup portion deeply to increase the capacity of the secondary battery. Additionally, there was a problem that the thickness of the pouch film became thinner during the molding process of the cup portion, causing defects such as cracks in the pouch film.

On the other hand, since the exterior material 200 of the secondary battery 10 according to the present disclosure is prepared by rolling or folding the exterior material sheet 200a, the electrode assembly 100 may be accommodated in the internal space 220 of the exterior material 200 without molding a separate cup portion. In this case, the conventional limitation due to the formation of the cup portion in the exterior material is not applied, so that the capacity of the secondary battery 10 may be easily increased by increasing the size of the internal space 220. Additionally, the exterior material 200 prepared by rolling or folding the exterior material sheet 200a is not formed with a part that decreases in thickness, and thus the occurrence of defects such as cracks in the exterior material 200 may be prevented.

For reference, the secondary battery 10 according to the present disclosure may be formed by seating the electrode assembly 100 on the upper surface of the exterior material sheet 200a in an unfolded state and then rolling or folding the exterior material sheet 200a. Additionally, the secondary battery 10 according to the present disclosure may be formed by rolling or folding the exterior material sheet 200a to form the internal space 220 and the exterior material opening 210 and then inserting the electrode assembly 100 into the exterior material opening 210. In both of the above cases, the electrode assembly 100 may be accommodated inside the exterior material 200 without molding a separate cup portion.

Meanwhile, referring to FIGS. 3 to 5, the cover member 300 may be a member that is coupled to the exterior material 200 and blocks the exterior material opening 210. The internal space 220 of the exterior material 200 in which the electrode assembly 100 is accommodated may be filled with an electrolyte, and the cover member 300 may seal the internal space 220 to prevent the electrolyte from leaking out of the internal space 220. Specifically, the cover member 300 inserted into the exterior material opening 210 that allows the internal space 220 to communicate with the outside may be coupled to the inner surface 230 of the exterior material 200 to seal the internal space 220. Here, the inner surface 230 of the exterior material 200 may be the second resin layer described above.

A length of a portion of the cover member 300 inserted into the exterior material 200 may be formed in various ways. For example, as shown in FIGS. 3 and 5, only a portion of the cover member 300 may be inserted into the exterior material 200, and the remaining portion of the cover member 300 may be exposed to the outside of the exterior material 200. Additionally, the entire cover member 300 may be inserted into the exterior material 200.

The cover member 300 may be made of a material that is not easily permeable to moisture in order to be coupled to the inner surface 230 of the exterior material 200 and seal the internal space 220 of the exterior material 200. For example, the cover member 300 may be obtained from a metal or resin, or may be obtained from a laminate sheet in which a resin layer is formed on both surfaces of a metal layer.

Meanwhile, the cover member 300 may have various shapes. For example, the cover member 300 may be composed of a body 300a and a gasket 300b to block the internal space 220 of the exterior material 200. Specifically, a through hole through which a gas lead 120 passes may be formed in the body 300a. The gasket 300b is a member that surrounds the body 300a and may prevent electrolyte leakage between the exterior material 200 and the body 300a. In this case, the gasket 300b may also be a medium for a firm coupling between the exterior material 200 and the body 300a.

The gasket 300b may have various shapes. For example, the gasket 300b may have a picture frame shape that surrounds a side surface of the outer surface of the body 300a. Additionally, the gasket 300b may be formed to surround both the inner and outer surfaces of the body 300a.

Additionally, the cover member 300 may have a cuboid box shape. In this case, four side surfaces of the cover member 300 inserted into the exterior material opening 210 face the inner surface 230 of the exterior material 200, and all four side surfaces of the cover member 300 are formed as flat planes, so that the four side surfaces of the cover member 300 may be firmly coupled to the inner surface 230 of the exterior material 200, thereby effectively sealing the internal space 220 of the exterior material 200.

The cover member 300 may be coupled to the inner surface 230 of the exterior material 200 in a thermal fusion manner to seal the internal space 220 of the exterior material 200. Specifically, the cover member 300 and the exterior material 200 may be pressed by a sealing block at a high temperature, or may be thermally fused to each other by simultaneously receiving heat and pressure by the sealing block. Here, the sealing block may press an edge portion of parts where the four flat side surfaces of the cover member 300 and the exterior material 200 meet to form a sealing portion S1 in which the exterior material 200 and the cover member 300 are thermally fused.

Here, there is no protruding or dug part in each of the four areas where the sealing block presses the exterior material 200 and the cover member 300, and thus the sealing block may transmit uniform pressure to the exterior material 200 and the body 300a of the cover member 300 that it presses. In this case, the inner surface 230 of the exterior material 200 may be uniformly thermally fused to the edge portions of each of the four surfaces of the cover member 300 to form four sealing portions S1.

Meanwhile, the sealing portion S1 may be an adhesive layer formed between the exterior material 200 and the cover member 300. Specifically, an adhesive layer by an adhesive tape or a cured adhesive may be formed between the edge portion of each of the four surfaces of the cover member 300 and the exterior material 200, and this may be the sealing portion S1 that seals the internal space 220.

The cover member 300 may be composed of a body 300a and a gasket 300b surrounding the side surface of the body 300a, and thus the sealing portion S1 may be an adhesive layer formed between the gasket 300b and the exterior material 200.

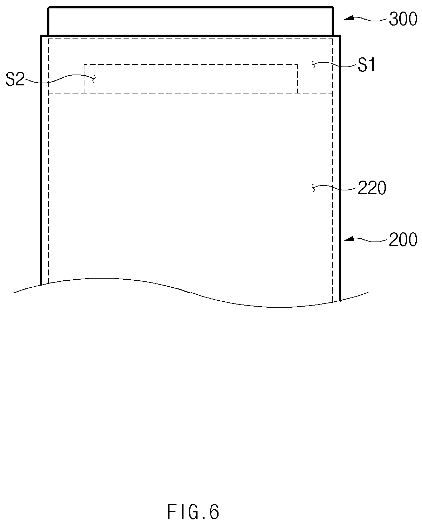

FIG. 6 is a view schematically showing a state in which an exterior material 200 and a cover member 300 are coupled to each other. FIG. 6 shows one surface of the cover member 300 inserted into the exterior material 200, and the part where one surface of the cover member 300 and the exterior material 200 face each other may be divided into a sealing portion S1 and a non-sealing portion S2.

Here, the non-sealing portion S2 is a part that is not pressed by the sealing block, and the exterior material 200 and the cover member 300 are separated from each other in the non-sealing portion S2. That is, the part where the exterior material 200 and the cover member 300 face each other may be composed of the sealing portion S1 in which the exterior material 200 and the cover member 300 are coupled to each other, and the non-sealing portion S2 in which the exterior material 200 and the cover member 300 are separated from each other.

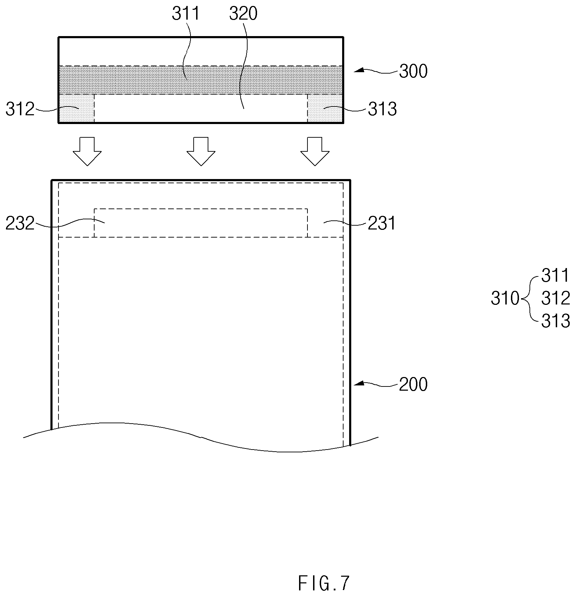

FIG. 7 is a view schematically showing a state in which a cover member 300 is inserted into an exterior material 200. After the cover member 300 is inserted into the exterior material 200, the part of one surface of the cover member 300 facing the exterior material 200 may be divided into a sealing area 310 and a separation area 320. The sealing area 310 may be an area that is sealed with the inner surface 230 of the exterior material 200 to seal the internal space 220, and the separation area 320 may be an area that is separated from the inner surface of the exterior material 200 without being coupled thereto.

Specifically, the sealing area 310 may be formed on the surface of the gasket 300b of the cover member 300. The gasket 300b surrounds the side surface of the body 300a, and thus the sealing area 310 may be formed on the outer surface of the gasket 300b. Here, the separation area 320 that is separated from the inner surface of the exterior material 200 without being coupled thereto may also be formed on the outer surface of the gasket 300b.

Meanwhile, a part of the inner surface 230 of the exterior material 200 that faces one surface of the cover member 300 may be divided into a sealing surface 231 and a separation surface 232. The sealing surface 231 is coupled to the cover member 300 to seal the internal space 220, and the separation surface 232 may be separated from the cover member 300 without being coupled thereto. Specifically, the sealing surface 231 may be coupled to the gasket 300b of the cover member 300. Additionally, the separation surface 232 faces the gasket 300b, but may be separated from the gasket 300b without being coupled thereto.

Additionally, when the cover member 300 is inserted into the exterior material 200, the sealing surface 231 and the sealing area 310 may correspond to each other, and the separation surface 232 and the separation area 320 may correspond to each other. That is, on each surface of the cover member 300 facing the inner surface 230 of the exterior material, a sealing area 310 to which the sealing surface 231 is coupled and a separation area 320 facing the separation surface 232 may be formed. In this case, the sealing surface 231 is coupled to the sealing area 310 to form a sealing portion S1 that seals the internal space 220 of the exterior material 200, and the separation surface 232 and the separation area 320 may be separated from each other to form a non-sealing portion S2.

The sealing surface 231 may be coupled to the sealing area 310 in a thermal fusion manner to seal the internal space 220. Specifically, the cover member 300 and the exterior material 200 may be pressed by the sealing block at a high temperature, or may be thermally fused to each other by simultaneously receiving heat and pressure by the sealing block. At this time, the sealing surface 231 and the sealing area 310 may be pressed by the sealing block, and the separation surface 232 and the separation area 320 may not be pressed by the sealing block.

Here, the sealing surface 231 and the sealing area 310 may be thermally fused to each other to form the sealing portion S1, and the separation surface 232 and the separation area 320 may remain separated from each other to form the non-sealing portion S2. The sealing areas 310 formed on each of the four side surfaces of the cover member 300 may be thermally fused to the sealing surface 231 formed on the exterior material 200 to form four sealing portions S1, and the separation areas 310 formed on each of the four surfaces of the cover member 300 may be separated from the separation surface 232 formed on the exterior material 200 to form four non-sealing portions S2.

Meanwhile, in the conventional pouch-type secondary battery, a sealing portion is formed on the entire part where the inner surface of the exterior material and the cover member face each other, and if the sealing portion is formed widely in this way, heat and pressure are not effectively transmitted to the edges of the sealing portion, and thus there is a problem that the sealing force of the edges of the sealing portion is weak. Additionally, when the entire sealing portion is pressed for a long time to improve the sealing force of the edges of the sealing portion, there is a problem that the sealing portion is damaged, such as cracks occurring in the middle part of the sealing portion due to excessive sealing in the middle part of the sealing portion.

In this regard, in the secondary battery 10 according to the present disclosure, the part where the inner surface 230 of the exterior material 200 and the cover member 300 face each other is divided into the sealing portion S1 and the non-sealing portion S2, so that the sealing portion S1 is formed relatively narrow, and the conventional problems caused by the wide formation of the sealing portion may be solved.

For reference, the sealing portion S1 may be an adhesive layer formed between the sealing surface 231 and the sealing area 310. Specifically, an adhesive layer by an adhesive tape or a cured adhesive may be formed between the sealing area 310 formed on each of the four surfaces of the cover member 300 and the sealing surface 231 formed on the exterior material 200, and this may be the sealing portion S1 that seals the internal space 220 of the exterior material 200.

Meanwhile, as shown in FIGS. 6 and 7, the sealing area 310 that is coupled to the sealing surface 231 to form the sealing portion S1 may include a first sealing area 311 that is formed in a straight line along the edge of the inner surface 230 of the exterior material 200. The first sealing area 311 may be coupled to the edge portion of the inner surface 230 of the exterior material 200 to block the internal space 220 of the exterior material 200 from communicating with the outside.

The sealing area 310 may include a second sealing area 312 extending from one end of the first sealing area 311 toward the inside of the exterior material 200 and a third sealing area 313 extending from the other end of the first sealing area 311 toward the inside of the exterior material 200. At this time, the second and third sealing areas 312, 313 may extend along one edge and the other edge of the cover member 300, respectively.

The edge portion of the cover member 300 is bent at a predetermined angle, and thus, even when coupled to the exterior material 200, it may be easily separated from the exterior material 200 after a certain period of time. However, when the second and third sealing areas 312, 313 are formed along the edges of the cover member 300, the coupling force of the edge portion of the cover member 300 is improved, and thus the edge portion of the cover member 300 may be prevented from being separated from the exterior material 200 after a certain period of time.

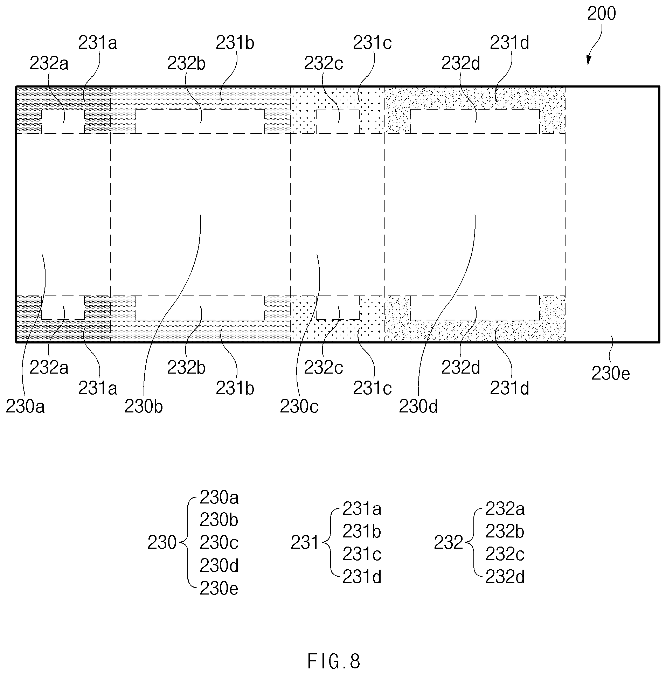

FIG. 8 is a development view of an exterior material 200 for specifically describing a sealing surface 231 and a separation surface 232. Referring to FIG. 8, the inner surface 230 of the exterior material 200 may be composed of first to fifth inner surfaces 230a, 230b, 230c, 230d, 230e. First to fourth sealing surfaces 231a, 231b, 231c, 231d may be formed on one end and the other end of the first to fourth inner surfaces 230a, 230b, 230c, 230d, respectively. Additionally, first to fourth separation surfaces 232a, 232b, 232c, 232d may be formed on one end and the other end of the first to fourth inner surfaces 230a, 230b, 230c, 230d, respectively.

The exterior material 200 may be rolled or folded to form an internal space 220 that accommodates the electrode assembly 100, and an exterior material opening 210 that allows the internal space 220 to communicate with the outside may be formed on both sides of the internal space 220. The cover member 300 may be inserted into the exterior material opening 210, and the first to fourth inner surfaces 230a, 230b, 230c, 230d may face four side surfaces of the inserted cover member 300, respectively.

At this time, the first to fourth sealing surfaces 231a, 231b, 231c, 231d formed on each of the first to fourth inner surfaces 230a, 230b, 230c, 230d may be thermally fused or adhesively coupled to the sealing areas 310 formed on each of the four side surfaces of the cover member 300 to form four sealing portions S1. Additionally, the first to fourth separation surfaces 232a, 232b, 232c, 232d formed on each of the first to fourth inner surfaces 230a, 230b, 230c, 230d may form four non-sealing portions S2 together with the separation areas 320 formed on each of the four side surfaces of the cover member 300.

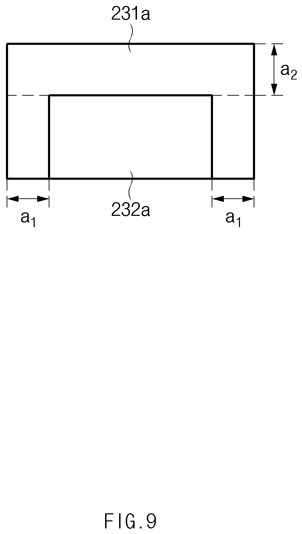

FIG. 9 is a view for describing parameters of an upper sealing surface in a secondary battery according to the present disclosure. FIG. 9 shows the first sealing surface 231a and the first separation surface 232a described above.

Here, the width a1 of the leg portion of the first sealing surface 231a should be formed thick enough to sufficiently seal the cover member 300 and the exterior material 200. However, when the width a1 of the leg portion of the first sealing surface 231a is formed too thick, the cover member 300 and the exterior material 200 may be excessively fused, thereby damaging the secondary battery 10, and thus the width a1 of the leg portion of the first sealing surface 231a should not be formed too thick.

That is, the width a1 of the leg portion of the first sealing surface 231a should have an appropriate length. Specifically, the width a1 of the leg portion of the first sealing surface 231a should have a length of 3 mm or more. When the width a1 of the leg portion of the first sealing surface 231a is less than 3 mm, the cover member 300 and the exterior material 200 may not be sufficiently sealed. On the other hand, when the width a1 of the leg portion of the first sealing surface 231a is 3 mm or more, the cover member 300 and the exterior material 200 may be sufficiently sealed.

Additionally, the width a1 of the leg portion of the first sealing surface 231a may have a length of 7 mm or less. When the width a1 of the leg portion of the first sealing surface 231a exceeds 7 mm, there is a possibility that the cover member 300 and the exterior material 200 may be excessively fused. When the width a1 of the leg portion of the first sealing surface 231a has a length of 7 mm or less, it is possible to prevent the cover member 300 and the exterior material 200 from being excessively fused.

Meanwhile, the width a2 of the table portion of the first sealing surface 231a should be formed thick enough to sufficiently seal the cover member 300 and the exterior material 200. However, when the width a2 of the table portion of the first sealing surface 231a is formed too thick, the cover member 300 and the exterior material 200 may be excessively fused, thereby damaging the secondary battery 10, and thus the width a2 of the table portion of the first sealing surface 231a should not be formed too thick.

That is, the width a2 of the table portion of the first sealing surface 231a should have an appropriate length. Specifically, the width a2 of the table portion of the first sealing surface 231a should have a length of 3 mm or more. When the width a2 of the table portion of the first sealing surface 231a is less than 3 mm, the cover member 300 and the exterior material 200 may not be sufficiently sealed. On the other hand, when the width a2 of the table portion of the first sealing surface 231a is 3 mm or more, the cover member 300 and the exterior material 200 may be sufficiently sealed.

Additionally, the width a2 of the table portion of the first sealing surface 231a may have a length of 10 mm or less. When the width a2 of the table portion of the first sealing surface 231a exceeds 10 mm, there is a possibility that the cover member 300 and the exterior material 200 may be excessively fused. When the width a2 of the table portion of the first sealing surface 231a has a length of 10 mm or less, it is possible to prevent the cover member 300 and the exterior material 200 from being excessively fused.

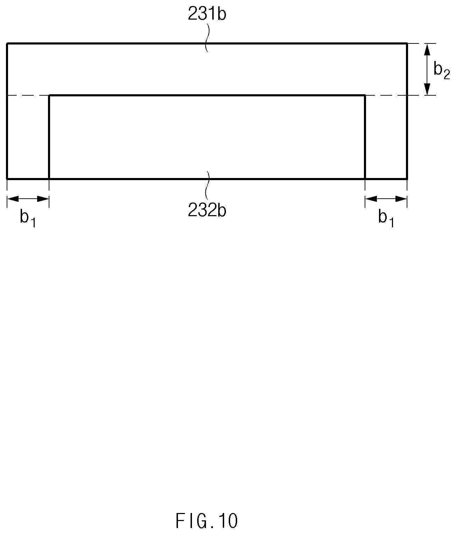

FIG. 10 is a view for describing parameters of a right sealing surface in a secondary battery according to the present disclosure. FIG. 10 shows the second sealing surface 231b and the second separation surface 232b described above.

In the case of the second sealing surface 231b, as in the case of the first sealing surface 231a, it is important that the leg portion and the table portion have appropriate thicknesses. The width b1 of the leg portion of the second sealing surface 231b may have a length of 3 mm or more and 7 mm or less. Additionally, the width b2 of the table portion of the second sealing surface 231b may have a length of 3 mm or more and 10 mm or less.

When the width b1 of the leg portion and the width b2 of the table portion of the second sealing surface 231b are formed as described above, it is possible to sufficiently seal the cover member 300 and the exterior material 200 while preventing the cover member 300 and the exterior material 200 from being excessively fused.

That is, the width a1 of the leg portion of the first sealing surface 231a and the width b1 of the leg portion of the second sealing surface 231b may both have a length of 3 mm or more and 7 mm or less. Additionally, the width a2 of the table portion of the first sealing surface 231a and the width b2 of the table portion of the second sealing surface 231b may both have a length of 3 mm or more and 10 mm or less.

At this time, the first sealing area 311 described above may correspond to the table portion of the sealing surfaces 231a, 231b, 231c, 231d, and the second and third sealing areas 312, 313 may correspond to the table portion of the sealing surfaces 231a, 231b, 231c, 231d.

Therefore, the thickness of the first sealing area 311 corresponds to the width a2 of the table portion of the first sealing surface 231a and the width b2 of the table portion of the second sealing surface 231b, so that the thickness of the first sealing area 311 may have a length of 3 mm or more and 10 mm or less. Additionally, the thicknesses of the second and third sealing areas 312, 313 correspond to the width a1 of the leg portion of the first sealing surface 231a and the width b1 of the leg portion of the second sealing surface 231b, so that the thicknesses of the second and third sealing areas 312, 313 may have a length of 3 mm or more and 7 mm or less. At this time, the thickness of the first sealing area 311 may be greater than or equal to the thickness of each of the second and third sealing areas 312, 313.

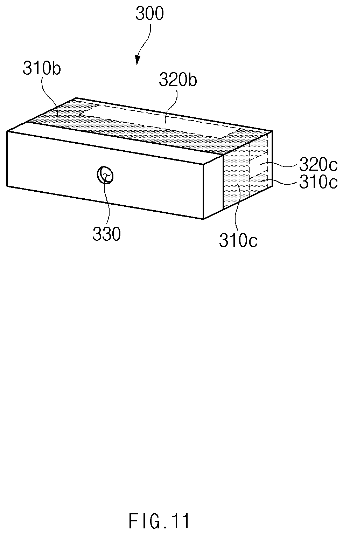

FIG. 11 is a perspective view showing a cover member 300. Referring to FIG. 11, sealing areas 310b, 310c and separation areas 320b, 320c may be formed on each of the upper surface and the right surface of the cover member 300. The sealing area 310b formed on the upper surface of the cover member 300 may be coupled to the second sealing surface 231b described above, and the separation area 320b formed on the upper surface of the cover member 300 may be separated from the second separation surface 232b described above. Additionally, the sealing area 310cb formed on the right surface of the cover member 300 may be coupled to the third sealing surface 231c described above, and the separation area 320c formed on the right surface of the cover member 300 may be separated from the third separation surface 232c described above.

Meanwhile, as shown in FIGS. 3 and 4, an electrolyte injection port for injecting an electrolyte into the internal space 220 of the exterior material 200 in which the electrode assembly 100 is accommodated may be formed in the cover member 300. The electrolyte injection port may be a through hole penetrating the cover member 300.

An electrolyte injection process for injecting an electrolyte into the internal space 220 may be performed through the electrolyte injection port. For example, the user may inject the electrolyte into the internal space 220 of the exterior material 200 through the electrolyte injection port in a state of disposing the secondary battery 10 so that the cover member 300 in which the electrolyte injection port is formed faces upward.

Additionally, a degassing process for discharging gas generated during activation of the secondary battery 10 to the outside may be performed through the electrolyte injection port. For example, the user may open the electrolyte injection port to induce the discharge of gas in the internal space 220.

After the electrolyte injection process or the degassing process, the electrolyte injection port may be sealed or welded to seal the internal space 220. Additionally, it is also possible to open the electrolyte injection port only when necessary, by installing a valve capable of opening and closing the electrolyte injection port.

On the other hand, the conventional pouch-type secondary battery has a gas pocket formed by rolling up a portion of the exterior material, and the gas pocket is removed from the exterior material after capturing the internal gas of the exterior material, so that there is conventionally a problem that a portion of the exterior material is repeatedly discarded. In this regard, the secondary battery 10 according to the present disclosure includes an electrolyte injection port formed in the cover member 300, and the user may inject an electrolyte into the internal space 220 and discharge gas from the internal space 220 to the outside through such an electrolyte injection port, thereby solving the conventional problem that a portion of the exterior material is repeatedly discarded.

Meanwhile, as shown in FIGS. 3 to 5, and 11, a through hole 330 into which an electrode lead 120 electrically connected to the electrode assembly 100 is inserted may be formed in the cover member 300. The electrode lead 120 is connected to electrode tabs 110 connected to each of the electrode uncoated portions of the electrodes stacked in the electrode assembly 100, and a portion of the electrode lead 120 may be exposed to the outside of the secondary battery 10. Here, the through hole 330 may be formed in the body 300a of the cover member 300, and the through hole 330 may have a shape corresponding to the shape of the inserted electrode lead 120.

Additionally, a sealing member such as an O-ring may be interposed between the through hole 330 and the electrode lead 120, or a sealant layer made of a thermoplastic resin may be formed. In this case, it is possible to prevent the electrolyte injected into the internal space 220 from leaking through the through hole 330.

### Sealing block

The sealing block 500 according to the present disclosure is a sealing block for sealing the secondary battery 10 described above, and may include a press body 510 that presses a part where the exterior material 200 and the cover member 300 of the secondary battery 10 face each other. Specifically, the press body 510 presses the exterior material 200 and the cover member 300, so that the exterior material 200 and the cover member 300 are fused to each other to seal the internal space 220.

The press body 510 thermally fuses the cover member 300 and the inner surface 230 of the exterior material 200, and may press one surface of the cover member 300 and the exterior material 200 in a state where the cover member 300 is inserted into the exterior material opening 210. In this case, a sealant layer having a shape corresponding to the shape of the pressing surface pressed by the press body 510 may be formed between one surface of the cover member 300 and the inner surface 230 of the exterior material 200.

As the sealant layer is formed between the inner surface 230 of the exterior material 200 and the cover member 300, the internal space 220 of the exterior material 200 is sealed, and thus the electrolyte injected into the internal space 220 may be prevented from leaking out.

Meanwhile, the press body 510 may press the exterior material 200 and the cover member 300 at a high temperature to thermally fuse them. Additionally, when a heating member 520 to be described later is installed in the press body 510, the press body 510 may simultaneously transmit heat and pressure to the exterior material 200 and the cover member 300 to thermally fuse them.

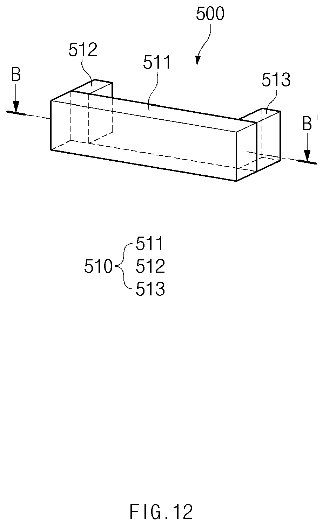

FIG. 12 is a perspective view of a sealing block 500 according to the present disclosure. FIG. 12 shows a specific shape of a press body 510 constituting the sealing block 500. Referring to FIG. 12, the press body 510 may include a first body 511 in a cuboid block shape extending in a straight line, a second body 512 extending from one end of the first body 511 in a direction perpendicular to the direction in which the first body 511 extends, and a third body 513 extending from the other end of the first body 511 in a direction parallel to the direction in which the second body 512 extends.

In this way, as the press body 510 has the first to third bodies 511, 512, 513, the sealing area 310 having the first to third sealing areas 311, 312, 313 described above may be formed in the cover member 300. That is, the press body 510 may form the first sealing area 311 facing the edge portion of the exterior material 200 and the second and third sealing areas 312, 313 in contact with the edges of the cover member 300 with respect to the cover member 300 inserted into the exterior material 200 at once.

In this case, the communication between the internal space 220 of the exterior material 200 and the outside may be blocked by the first sealing area 311 formed by the press body 510. Additionally, the coupling force of the edge portions of the cover member 300 is improved by the second and third sealing areas 312, 313 formed by the press body 510, so that the edge portions of the cover member 300 may be prevented from being separated from the exterior material 200 after a certain period of time.

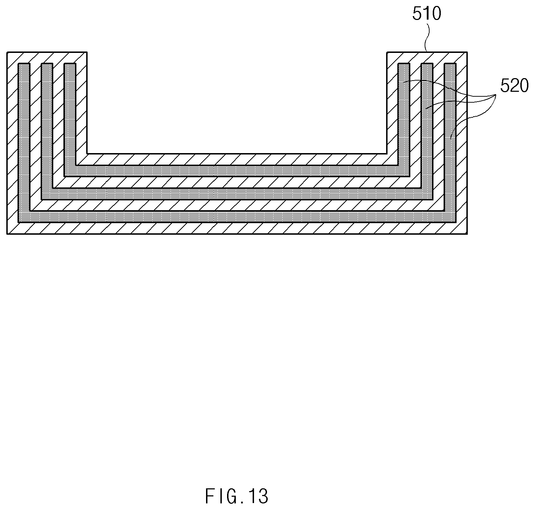

FIG. 13 is a cross-sectional view taken along the BB' direction of FIG. 12. Referring to FIG. 13, a heating member 520 that heats the press body 510 may be installed inside the press body 510. The heating member 520 heats the press body 510 to maintain the press body 510 at a high temperature, and may be configured in various ways. For example, the heating member 520 may be a heating wire installed adjacent to the pressing surface of the press body 510 where the press body 510 presses the exterior material 200 and the cover member 300.

When the heating member 520 is installed inside the press body 510, the temperature of the press body 510 may be maintained high while the exterior material 200 and the cover member 300 are pressed. Therefore, the press body 510 may simultaneously transmit heat and pressure to the exterior material 200 and the cover member 300, so that the exterior material 200 and the cover member 300 may be thermally fused without a pre-heating step of bringing the exterior material 200 and the cover member 300 to a high temperature state prior to pressing.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 10: | Secondary battery | 100: | Electrode assembly |
| 110: | Electrode tab | 120: | Electrode lead |
| 200: | Exterior material | 200a: | Exterior material sheet |
| 201a: | One end of exterior material sheet | 202a: | The other end of exterior material sheet |
| 210: | Exterior material opening | 220: | Internal space |
| 230: | Inner surface of exterior material | 231: | Sealing surface |
| 232: | Separation surface | 300: | Cover member |
| 310: | Sealing area | 311: | First sealing area |
| 312: | Second sealing area | 313: | Third sealing area |
| 320: | Separation area | 330: | Through hole |
| 500: | Sealing block | 510: | Press body |
| 511: | First body | 512: | Second body |
| 513: | Third body | 520: | Heating member |
| S1: | Sealing portion | S2: | Non-sealing portion |

## Claims

1. A secondary battery comprising:
an electrode assembly;
a pouch-type exterior material having an internal space that accommodates the electrode assembly and an exterior material opening that allows the internal space to communicate with the outside; and
a cover member inserted into the exterior material opening,
wherein a part of an inner surface of the exterior material facing the cover member comprises:
a sealing surface that is coupled to the cover member to seal an inside of the exterior material; and
a separation surface that is separated from the cover member.

2. The secondary battery according to claim 1,
wherein the exterior material is formed by rolling or folding an exterior material sheet so that one end and the other end of the exterior material sheet comprising a metal layer and a resin layer formed on both surfaces of the metal layer meet each other.

3. The secondary battery according to claim 2,
wherein one end and the other end of the exterior material sheet are bonded or fused to each other.

4. The secondary battery according to claim 1,
wherein the sealing surface is coupled to the cover member by adhesion or fusion.

5. The secondary battery according to claim 1,
wherein the cover member has a cuboid block shape.

6. The secondary battery according to claim 5,
wherein on each surface of the cover member facing the inner surface of the exterior material, a sealing area where the sealing surface is coupled and a separation area facing the separation surface are formed.

7. The secondary battery according to claim 6,
wherein the sealing area comprises:
a first sealing area in a straight line shape extending along an edge of the inner surface of the exterior material;
a second sealing area extending from one end of the first sealing area toward the internal space; and
a third sealing area extending from the other end of the first sealing area toward the internal space.

8. The secondary battery according to claim 7,
wherein the second and third sealing areas extend along one side edge and the other side edge of the cover member, respectively.

9. The secondary battery according to claim 1,
wherein a through hole into which an electrode lead electrically connected to the electrode assembly is inserted is formed in the cover member.

10. The secondary battery according to claim 1,
wherein an electrolyte injection port for injecting an electrolyte into the internal space of the exterior material in which the electrode assembly is accommodated is formed in the cover member.

11. The secondary battery according to claim 1,
wherein a portion of the cover member is exposed to an outside of the exterior material.

12. The secondary battery according to claim 8,
wherein a thickness of the first sealing area is greater than or equal to a thickness of each of the second sealing area and the third sealing area.

13. The secondary battery according to claim 8,
wherein a thickness of the first sealing area is 3 mm to 10 mm, and
a thicknesses of the second sealing area and the third sealing area are 3 mm to 7 mm, respectively.

14. A sealing block for sealing a secondary battery comprising an electrode assembly; a pouch-type exterior material forming an internal space that accommodates the electrode assembly; and a cover member inserted into an exterior material opening that allows the internal space to communicate with an outside, the sealing block comprising:
a press body that presses the exterior material and the cover member, thereby allowing the exterior material and the cover member to be fused to each other to form a sealing portion for sealing the internal space.

15. The sealing block according to claim 14,
wherein the press body comprises:
a first body in a cuboid block shape extending in a straight line;
a second body extending from one end of the first body in a direction perpendicular to the direction in which the first body extends; and
a third body extending from the other end of the first body in a direction parallel to the direction in which the second body extends.

16. The sealing block according to claim 14, further comprising:
a heating member that heats the press body.
